(19) Europäisches Patentamt
European Patent Office
Office européen des brevets

(11) **EP 4 629 352 A1**

(12) **EUROPEAN PATENT APPLICATION**

(43) Date of publication:
**08.10.2025 Bulletin 2025/41**

(21) Application number: **25157386.1**

(22) Date of filing: **12.02.2025**

(51) International Patent Classification (IPC):
**H01M 8/00** (2016.01) **H01M 8/04014** (2016.01)
**H01M 8/04111** (2016.01) **H01M 8/04701** (2016.01)
**H01M 8/04746** (2016.01) **H01M 8/10** (2016.01)

(52) Cooperative Patent Classification (CPC):
**H01M 8/04014; H01M 8/04111; H01M 8/04708;
H01M 8/04753;** H01M 2008/1095; H01M 2250/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.02.2024 US 202418586177**

(71) Applicant: **Pipistrel D.O.O.
5270 Ajdovscina (SI)**

(72) Inventor: **Tavčar, Gregor
5270 Ajdovščina (SI)**

(74) Representative: **Glück Kritzenberger
Patentanwälte PartGmbB
Franz-Mayer-Str. 16a
93053 Regensburg (DE)**

(54) **SYSTEM AND METHOD FOR RECREATING GROUND CONDITIONS FOR FUEL CELL SYSTEMS OPERATING AT HIGH ALTITUDES**

(57)    A system and method of recreating ground conditions for a fuel cell system for use in a vehicle includes providing a fuel cell system, a compressor, a heat exchanger, a first turbine, a second turbine, and an electric motor drivingly connected to the compressor, the first turbine, and the second turbine along a common shaft. The method requires receiving air at an ambient pressure and temperature, compressing the air via the compressor, and discharging the compressed air into the fuel cell via the heat exchanger. The fuel cell generates an exhaust flow which is then expanded and cooled in the first turbine, heated via the heat exchanger, and then expanded and cooled in the second turbine and expelled at a pressure substantially equal to the ambient pressure.

**FIG. 1**

## Description

## BACKGROUND

### 1. FIELD

The disclosure relates generally to the field of fuel cell-powered aircraft. More specifically, the disclosure relates to a system and method for recreating ground conditions for a fuel cell system used at higher altitudes.

### 2. RELATED ART

Aircraft fuel cell systems capable of operating at high altitudes are generally known in the art. For example, U.S. Patent No. 6,908,702 to McElroy et al. discloses a fuel cell system which may be used in traditional aircraft and includes the use of compressors and heat exchangers. U.S. Patent No. 9,604,730 to Hagh et al. discloses a fuel cell system for an aircraft having multiple compressors and multiple heat exchangers, and in some embodiments also includes a gas turbine. U.S. Patent No. 10,644,331 to Stoia et al. discloses a fuel cell system for an aircraft including compressors, heat exchangers, and gas turbines. U.S. Patent Publication No. 2022/0344683 to Ancimer et al. discloses a fuel cell system for use in trucks at high altitude using multi-stage compression, heat exchangers, and gas turbines. U.S. Patent Publication No. 2022/0344687 to Okabe et al. discloses a fuel cell system for use at higher altitudes using an oxidant gas system comprising a compressor and a refrigerant flow path.

## SUMMARY

This summary is provided to introduce a selection of concepts in a simplified form that are further described below in the detailed description. This summary is not intended to identify key features or essential features of the claimed subject matter. Other aspects and advantages of the invention will be apparent from the following detailed description of the embodiments and the accompanying drawing figures.

In certain embodiments, a method of recreating ground conditions for a fuel cell system for use in a vehicle includes: providing a fuel cell system, a compressor, a heat exchanger, a turbine, and an electric machine drivingly connected to the compressor and the turbine; receiving air at an ambient pressure and an ambient temperature at an inlet of the compressor; forming compressed air by increasing the pressure and temperature of the air via the compressor and discharging the compressed air; reducing the temperature of the compressed air in the heat exchanger and discharging the air into the fuel cell system; generating electrical energy via the fuel cell system and discharging a fuel cell exhaust flow from the fuel cell system; reducing the pressure and temperature of the fuel cell exhaust flow via the turbine and discharging a turbine exhaust flow from the turbine into the heat exchanger; increasing the temperature of the turbine exhaust flow via the heat exchanger and discharging the increased temperature turbine exhaust from the heat exchanger; and discharging an exhaust flow from the system at a pressure which is substantially equal to the ambient pressure.

In certain embodiments, the method further includes balancing the power produced by the turbine and the power consumed by the compressor via the electric machine.

In certain embodiments, the method further includes providing a second turbine drivingly connected to the electric machine; and reducing the temperature and pressure of the first turbine exhaust flow discharged from the heat exchanger via the second turbine; wherein the system exhaust flow is discharged from the second turbine.

In certain embodiments, the method further includes providing a second heat exchanger; cooling the compressed air discharged from the compressor in the second heat exchanger to an intermediate temperature between the temperature of the compressed air discharged by the compressor and the compressed air discharged by the first heat exchanger; and increasing the temperature of the fuel cell system exhaust flow via the second heat exchanger between the fuel cell system and the turbine; wherein the system exhaust flow is discharged from the first heat exchanger.

In certain embodiments, the method further includes providing a second compressor drivingly connected to the electric machine; and increasing the pressure and temperature of the compressed air exiting the heat exchanger between the heat exchanger and the fuel cell system.

In certain embodiments, a system for recreating ground conditions for a fuel cell system for use in a vehicle includes: at least one compressor; at least one turbine; at least one heat exchanger; and at least one electric machine; wherein: the system connects to the fuel cell system via at least two of: at least one compressor, at least one heat exchanger, and at least one turbine; and the at least one compressor and the at least one turbine are drivingly connected to the at least one electric machine, the at least one electric machine being configured to convert between the electrical power subtracted from or added to the fuel cell system and the sum of mechanical powers of the at least one compressor and the at least one turbine.

In certain embodiments, the at least one compressor and the at least one turbine are drivingly connected to the electric machine along a common shaft.

In certain embodiments, the electric machine is selected from the group consisting of: an electric motor, a generator, and a motor-generator.

In certain embodiments, the fuel cell system includes one or more fuel cell stacks and at least one balance of plant device.

In certain embodiments, the at least one compressor is a single compressor, the at least one heat exchanger is a single counterflow heat exchanger, and the at least one turbine includes a first turbine and a second turbine.

In certain embodiments, the compressor is configured to receive ambient air at an ambient temperature and pressure, the compressor being connected to and in fluid communication with a first side of the heat exchanger; the fuel cell system is connected to and in fluid communication with the first turbine, the first turbine being configured to receive a fuel cell system exhaust flow and discharge a first turbine exhaust flow into a second side of the heat exchanger; and the second turbine is connected to and in fluid communication with the second side of the heat exchanger, the second turbine being configured to discharge a second turbine exhaust flow at a pressure substantially equal to the ambient pressure.

In certain embodiments, the at least one compressor is a single compressor, the at least turbine is a single turbine, and the at least one heat exchanger is a first heat exchanger and a second heat exchanger.

In certain embodiments, the compressor is configured to receive ambient air at an ambient temperature and pressure, the compressor being connected to and in fluid communication with a first side of the first heat exchanger; a first side of the second heat exchanger is connected to and in fluid communication with the first side of the first heat exchanger and the fuel cell system; the second side of the first heat exchanger is connected to and in fluid communication with the fuel cell system and the turbine; and the second side of the second heat exchanger is connected to and in fluid communication with the turbine and is configured to discharge an exhaust flow at a pressure substantially equal to the ambient pressure.

In certain embodiments, the at least one compressor is a first compressor and a second compressor, the at least one heat exchanger is a single counterflow heat exchanger, and the at least one turbine is a single turbine.

In certain embodiments, the first compressor is configured to receive ambient air at an ambient temperature and pressure, the first compressor being connected to and in fluid communication with a first side of the heat exchanger; the second compressor is connected to and in fluid communication with the first side of the heat exchanger and the fuel cell system; and the turbine is connected to and in fluid communication with the fuel cell system and a second side of the heat exchanger and the second side of the heat exchanger is configured to discharge an exhaust flow at a pressure substantially equal to the ambient pressure..

## BRIEF DESCRIPTION OF THE DRAWING FIGURES

Illustrative embodiments of the present disclosure are described in detail below with reference to the attached drawing figure, wherein:

FIG. 1 illustrates a schematic view of a system for recreating ground conditions for a fuel cell system according to an embodiment of the invention;

FIG. 2 is a flowchart of a method for recreating ground conditions for a fuel cell system according to an embodiment of the invention;

FIG. 3 illustrates a schematic view of a system for recreating ground conditions for a fuel cell system according to another embodiment of the invention; and

FIG. 4 illustrates a schematic view of a system for recreating ground conditions for a fuel cell system according to yet another embodiment of the invention.

## DETAILED DESCRIPTION

The following detailed description references the accompanying drawings that illustrate specific embodiments in which the invention can be practiced. The embodiments are intended to describe aspects of the invention in sufficient detail to enable those skilled in the art to practice the invention. The following detailed description is, therefore, not to be taken in a limiting sense. The scope of the invention is defined only by the appended claims.

In this description, references to "one embodiment," "an embodiment," or "embodiments" mean that the feature or features being referred to are included in at least one embodiment of the technology. Separate references to "one embodiment," "an embodiment," or "embodiments" in this description do not necessarily refer to the same embodiment and are also not mutually exclusive unless so stated and/or except as will be readily apparent to those skilled in the art from the description. For example, a feature, structure, act, etc. described in one embodiment may also be included in other embodiments, but is not necessarily included. Thus, the technology can include a variety of combinations and/or integrations of the embodiments described herein.

In this description, the term "fuel cell system" is used to refer to any electrochemical-mechanical energy conversion system that converts chemical energy of fuel into electric power by means of fuel cells and comprises, but not limited to: one or several fuel cell stacks, a fuel delivery and conditioning system, an air delivery and conditioning system and a cooling system.

Fuel cell systems are a known method of generating electrical power through chemical and/or mechanical means, and are increasingly common in transportation applications. Most fuel cell systems are designed to operate at ground-level atmospheric conditions (pressures of approximately 1.0 bar, temperatures between -20° and 40° C, etc.) and would therefore not be suitable for use in applications with substantially different atmospheric conditions, such as aircraft at high altitudes. While it may be possible to create a fuel cell system capable of operating at the atmospheric conditions experienced by aircraft or other high-altitude applications, doing so may prove to be an expensive and tedious process. It may be preferable, therefore, to be able to augment existing fuel cell systems and fuel cell technology with a system capable of creating and maintaining ground-level atmospheric conditions or similar operating conditions for the fuel cell system independent of actual atmospheric conditions. This may allow common fuel cell systems to be implemented in aircraft or in other applications at higher altitudes, for example. Although the invention is described herein with reference to aircraft-specific applications, one of skill in the relevant art will understand that the invention may be suitable for use in a variety of applications, without departing from the scope of the invention.

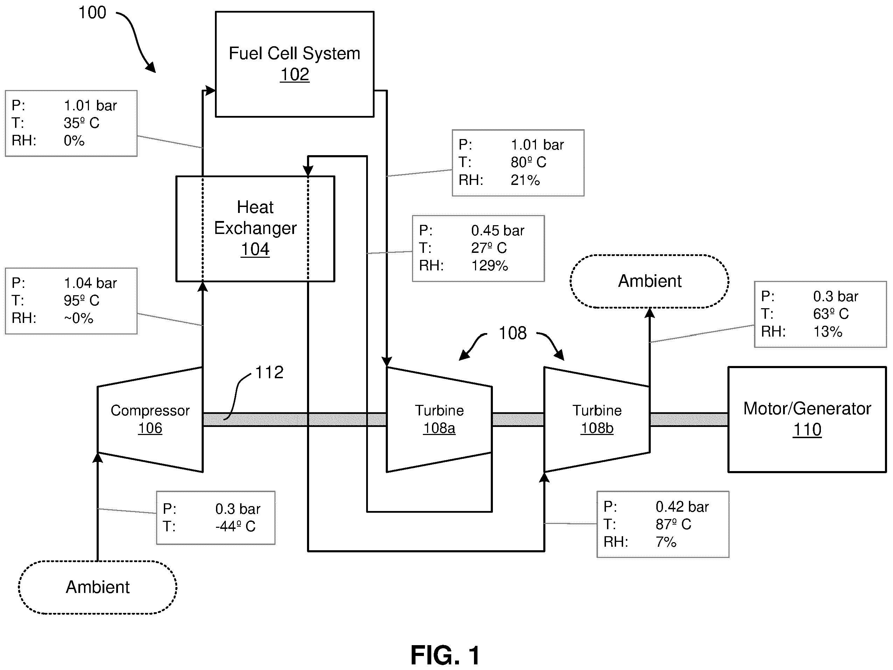

FIG. 1 illustrates a system 100 for creating and maintaining ground-level operating conditions for a fuel cell system 102 at various atmospheric conditions. The system 100 generally includes one or more heat exchangers 104, one or more compressors 106, one or more turbines 108, and an electromechanical power device 110, such as a motor or generator. The system 100 may alternately be referred to as a kit which may be used in conjunction with any fuel cell system 102 either now known or later developed.

FIG. 1 illustrates the various components of an embodiment of the system 100 as well as approximate values of properties of the air or fluid which flows through the system, such as the pressure, temperature, and relative humidity. One of skill in the art will understand that the quantities expressed in FIG. 1 and in the description below are approximations which are merely exemplary in nature and are not intended to be limiting.

The system 100 intakes ambient air into a compressor 106, wherein the incoming ambient air is at a reduced pressure and temperature compared to air at ground level. For example, at an altitude of approximately 30,000 feet, the air may be at approximately 0.3 bar and approximately -44° C (U. S. standard atmosphere: 30.151 kPa and -44.35 °C at 30,000 ft altitude), although the exact pressure and temperature may vary depending on altitude, weather conditions, etc. as noted above. The compressor 106 compresses the air, referred to as feed air, to approximately 1.04 bar, while the feed air is heated to temperatures in excess of 95° C. While a pressure around 1.0 atm (1.01 bar) is desirable for the fuel cell system 102, the temperature of the feed air exceeds the desired operational parameters of the fuel cell system 102. Thus, the feed air is cooled using a heat exchanger 104.

The heat exchanger 104 may be of any type now known or later developed, such as a counterflow heat exchanger as in the illustrated embodiment. The heat exchanger 104 cools the feed air, which is routed through the hot side of the heat exchanger 104, to a temperature which is suitable for the fuel cell system 102. In the illustrated embodiment, the heat exchanger 104 cools the feed air to approximately 35° C at the expense of some pressure drop bringing the pressure at the fuel cell system's inlet to approximately 1.01 bar (i.e., the design inlet pressure of the fuel cell system 102). Relative humidity of the feed air on its way from compressor to the fuel cell systems intake is always close to zero percent.

The fuel cell system 102 may include one or more fuel cell stacks as well as the accompanying balance of plant devices, which would be common in fuel cell systems used in typical ground-level transportation. These may include, but are not limited to, one or more of: compressors, blowers, humidifiers, recirculation pumps, pressure reduction valves, back pressure valves, anode recirculation pipes, anode recirculation pumps, venturi injectors or ejector-injector pumps, liquid cooling system pipes, two-phase cooling pipes, coolant heat exchangers, coolant condensers, coolant pumps, cathode water spray injectors, cathode water condensers or separators, cathode recirculation pumps, and anode water separators. The fuel cell may be of any type now known or later developed, such as a hydrogen PEM fuel cell, which is used to generate electrical energy from a chemical reaction and mechanical act. The ground conditions, for which the fuel cell system 102 is designed, means that it aspirates fresh air at or around atmospheric pressure and at or around room temperature and ejects exhaust air against a back pressure of or around atmospheric pressure. Within the fuel cell system 102, the conditioning of the fresh air to produce feed air may be of any sort (e.g. the feed air may be pressurized using compressor(s) reaching pressures around or in excess of 2.0 bar, or not pressurized utilizing blowers providing only small overpressure to ensure sufficient mass flow; an air humidifier may be used, or the humidifier may be absent from the system due to either the fuel cells providing sufficient self-humidification or the fuel cells being of a type that doesn't need air humidification; etc.). Since the electrochemical reaction within a hydrogen fuel cell produces water vapor and waste heat, generally the temperature and the relative humidity of the fuel cell system exhaust air are elevated in comparison to that of the feed air. This results in a fuel cell system exhaust flow which is approximately 1.01 bar (i.e. the design pressure against which the exhaust air is ejected), and is at the same temperature of the operating temperature of the fuel cell, such as 80° C, although the exact temperature of the exhaust may vary depending on the specific nature of the fuel cell. In the illustrated embodiment, the fuel cell system 102 produces exhaust with a relative humidity of approximately 21%, although the exact relative humidity may vary depending on the specific nature of the fuel cell and the presence of water vapor may be even completely absent in cases of fuel cells running on fuels not containing hydrogen.

The fuel cell exhaust flow is then expanded through one or more turbines 108, such as the first turbine 108a shown in FIG. 1. The turbine 108a expands the fuel cell exhaust to a lower pressure and temperature, while substantially increasing the relative humidity of the exhaust. In the illustrated embodiment, the turbine exhaust has an approximate pressure of 0.45 bar, temperature of approximately 27° C, and a relative humidity of about 129%. In some embodiments, such as that shown, the first turbine does not expand the fuel cell exhaust all the way to atmospheric pressure. It may be desirable to expand the fuel cell exhaust to an intermediate pressure between the fuel cell system 102 exit pressure (approximately 1.01 bar) and the ambient pressure (0.3 bar, for example). Expanding to an intermediate pressure may avoid unwanted water vapor condensation in the turbine, which may occur if the temperature of the turbine exhaust is too low. Additionally, using an intermediate pressure, especially in combination with an additional reheating step (see next item), may allow for additional power extraction from a second turbine 108b.

In some embodiments, the exhaust from the first turbine 108a may be fed into the cold side of heat exchanger 104, where the exhaust flow may then be heated and dried while simultaneously cooling the feed air from the compressor 106 which is routed through the hot side of the heat exchanger 104. In the illustrated embodiment, the exhaust from the first turbine 108a is heated to approximately 87° C at the expense of some pressure drop through the heat exchanger 104 bringing the pressure to around 0.42 bar at cold side outlet of the heat exchanger 104. The relative humidity is significantly reduced, however, with the illustrated embodiment reducing the relative humidity to approximately 7%.

In some embodiments, the flow from the cool side of the heat exchanger 104 then enters a second turbine 108b, which functions substantially similar to turbine 108a. In the second turbine 108b, the heated exhaust flow from the first turbine is expanded to ambient pressure (in the illustrated embodiment, about 0.3 bar) and cooled as it is expelled from the system 100. The exhaust flow from the second turbine 108b in the illustrated embodiment exits the system 100 to ambient at approximately 63° C with a relative humidity of 13%, although one of skill in the art will appreciate that in other embodiments the exhaust flow from the second turbine may be at different pressures, temperatures, and relative humidities in other embodiments or applications having different ambient conditions and/or different fuel cell types.

In some embodiments, the compressor 106 and the turbine(s) 108a and 108b may share a common shaft 112 which is driven by an electromechanical device such as an electric motor 110. While each of the turbines 108a and 108b produces some shaft power which may be used to drive the compressor, the electric motor or generator 110 provides additional power to ensure the compressor 106 is operable or, in cases where the turbines provide more power than the compressor consumes, adds this surplus power to the fuel cell system output. The balance of power required by the compressor 106, generated by the turbines 108a and 108b, and provided by the electric motor 110 can be expressed as a portion of the power of the fuel cell system 102. In some embodiments, such as that illustrated in FIG. 1, the compressor 106 requires approximately 16.8% of the power of the fuel cell system 102, the first turbine 108a recuperates approximately 6.4% of the power of the fuel cell system 102, and the second turbine recuperates approximately 2.8% of the power of the fuel cell system, leaving the electric motor 110 to provide 7.5% of the power of the fuel cell system 102. Generally, the amount of power required by the electric motor 110 can be expressed by the following equation:

$$W_{motor} = W_{comp} - W_{T1} - W_{T2}$$

wherein $W_{motor}$ is the power required by the motor 110, $W_{comp}$ is the power needed to drive the compressor 106, and $W_{T1}$ and $W_{T2}$ are the power recuperated by the first and second turbines 108a and 108b, respectively.

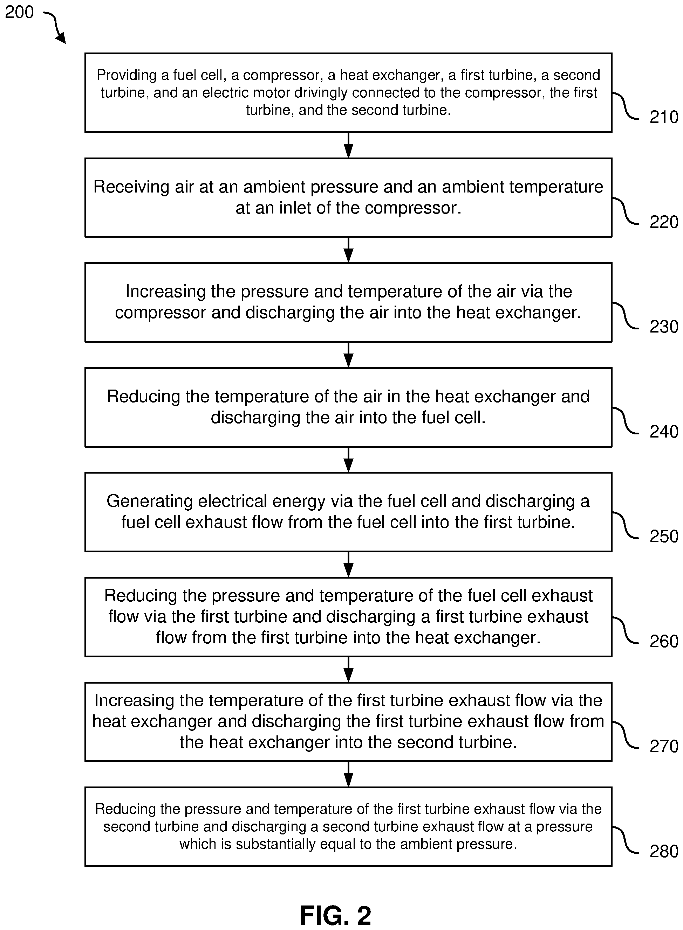

FIG. 2 is a flowchart of an exemplary method 200 for recreating ground conditions for a vehicle fuel cell system. In embodiments, the vehicle is an aircraft.

At step 210, a fuel cell system, a compressor, a heat exchanger, a first turbine, a second turbine, and an electric motor are provided. In an example of step 210, a fuel cell system 102, a compressor 106, a heat exchanger 104, a first turbine 108a, a second turbine 108b, and an electric motor 110 are provided. The electric motor 110 is drivingly connected to the compressor 106, the first turbine 108a, and the second turbine 108b, in some embodiments along a common shaft 112. In other embodiments, the system 100 may include multiple electric motors or generators 110, wherein the compressor 106 is powered by its own motor 110, and the turbine(s) 108 are each connected to their own generator(s) 110, which would enable different rotational speeds among the compressor 106, the first turbine 108a, and the second turbine 108b.

At step 220, air is received at an inlet of the compressor. The received air is at an ambient pressure and an ambient temperature. In an example of step 220, ambient air is received at an inlet of compressor 106.

At step 230, the pressure and temperature of the air are increased via the compressor and the air is discharged into the heat exchanger. In an example of step 230, the pressure and temperature of the air are increased via compressor 106 and the air is discharged into the heat exchanger 104.

At step 240, the temperature of the air in the heat exchanger is reduced and the air is discharged into the fuel cell. In an example of step 240, the temperature of the air in the heat exchanger 104 is reduced and the air is discharged into the fuel cell system 102.

At step 250, electrical energy is generated via the fuel cell system and a fuel cell exhaust air flow is discharged from the fuel cell system into the first turbine. In an example of step 250, electrical energy is generated via fuel cell system 102 and a fuel cell exhaust flow is discharged from the fuel cell system 102 into the first turbine 108a.

At step 260, the pressure and temperature of the fuel cell exhaust flow is reduced via the first turbine in exchange for mechanical power on the turbine shaft and a first turbine exhaust flow is discharged from the first turbine into the heat exchanger. In an example of step 260, the pressure and temperature of the fuel cell exhaust flow is reduced via first turbine 108a, the mechanical power produced by first turbine 108a is added to the common shaft 112, and a first turbine exhaust flow is discharged from first turbine 108a into the heat exchanger 104.

At step 270, the temperature of the first turbine exhaust flow is increased via the heat exchanger and the first turbine exhaust flow is discharged from the heat exchanger into the second turbine. In an example of step 270, the temperature of the first turbine exhaust flow is increased via heat exchanger 104 and the first turbine exhaust flow is discharged from heat exchanger 104 into the second turbine 108b.

At step 280, the pressure and temperature of the first turbine exhaust flow is reduced via the second turbine in exchange for mechanical power on the turbine shaft and a second turbine exhaust flow is discharged at a pressure which is substantially equal to the ambient pressure. In an example of step 280, the pressure and temperature of the first turbine exhaust flow is reduced via second turbine 108b, the mechanical power produced by first turbine 108b is added to the common shaft 112, and a second turbine exhaust flow is discharged at a pressure which is substantially equal to the ambient pressure.

By cooling the charge air from the compressor 106 using the exhaust from the turbine(s) 108 and the heat exchanger 104, the system 100 and method 200 do not require an additional dedicated cooling system. Alleviating the need for a dedicated cooling system may provide numerous benefits, including reduced weight and packaging and avoiding additional air drag due to additional cooling requirements, which may be especially advantageous in aircraft applications where drag, weight and packing should be minimized.

In some embodiments, the method 200 may further include balancing the disparity in power between the power generated by the first and second turbines 108a and 108b and the power consumed or needed by the compressor 106. This may be achieved using the electric motor-generator 110 by either adding or subtracting power from the common shaft 112.

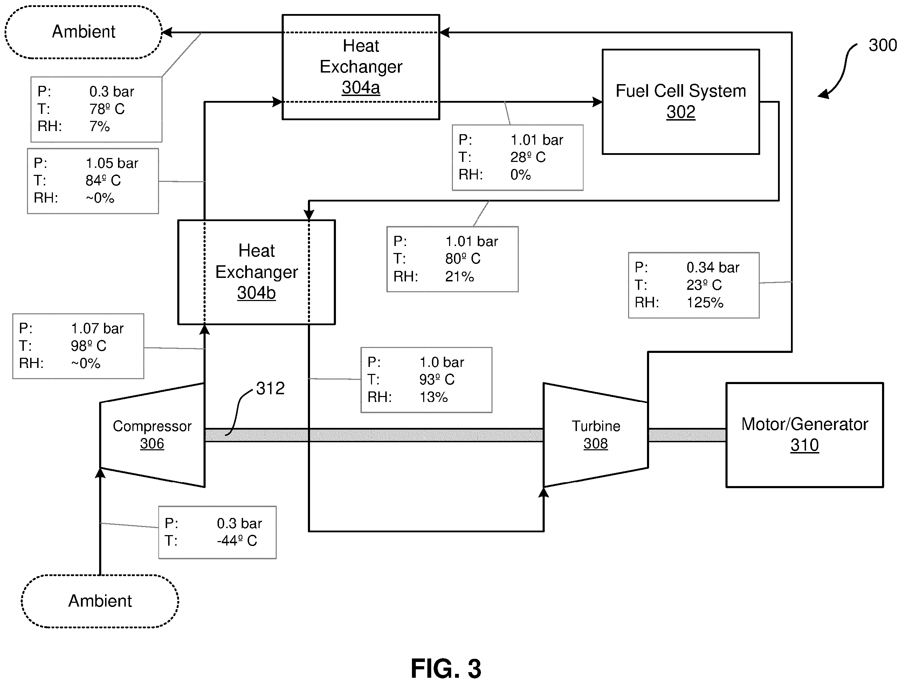

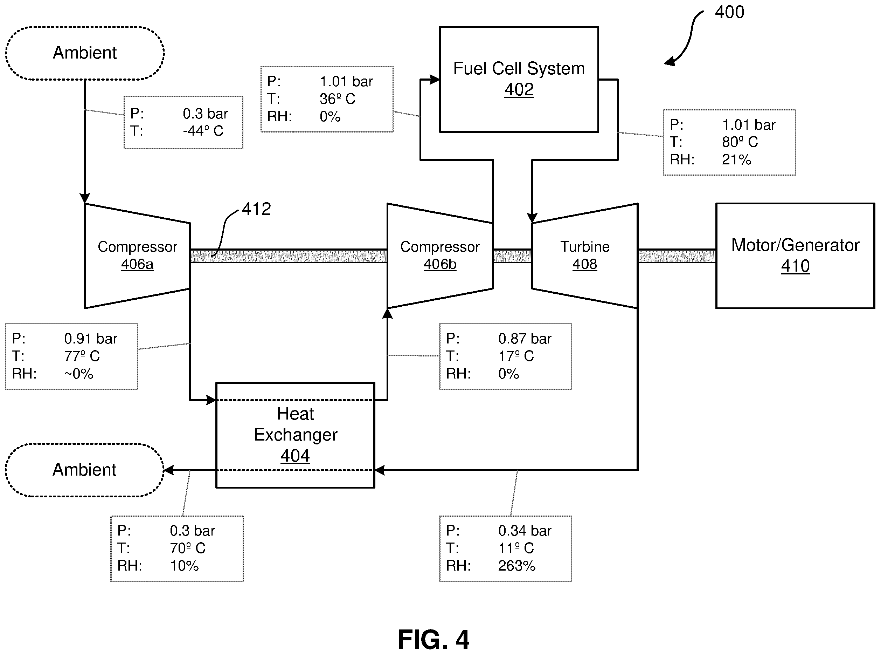

FIGs. 3 and 4 each illustrate another embodiment of a system 300 and 400, respectively, for recreating ground conditions for a fuel cell system. Each system 300 and 400 performs substantially the same function as the system 100 shown in FIG. 1, while employing an alternate arrangement of compressors, turbines, and heat exchangers compared to system 100. For example, system 300 includes an additional heat exchanger 304b and omits one turbine compared to system 100, and system 400 includes an additional compressor 406 and omits one turbine compared to system 100. One of skill in the art will appreciate that other embodiments not shown or expressly described herein may include further combinations of compressors, turbines, and/or heat exchangers without departing from the scope of the invention.

Referring now to FIG. 3, the system 300 for recreating ground conditions for a fuel cell system 302 generally includes a compressor 306, a first and second heat exchanger 304a and 304b, respectively, a turbine 308, and a motor-generator 310. At an inlet, the compressor 306 intakes ambient air which may be at a reduced temperature and pressure compared to air at ground conditions. For example, the ambient air may have a pressure of approximately 0.3 bar, and a temperature of approximately -44° C (roughly corresponding to the temperature and pressure found at an altitude of 30,000 feet as given by the U.S. standard atmosphere). The compressor 306 compresses the incoming air and increases the pressure to approximately 1.07 bar, while the temperature also increases to approximately 98° C. This compressed air, or feed air, is then cooled by passing through the second heat exchanger 304b, to a temperature of approximately 84° C with some pressure drop.

The feed air is then routed through the first heat exchanger 304a (performing substantially the same function as heat exchanger 104 of system 100), which further reduces the temperature of the feed air and adds some additional pressure drop. The flow exiting the first heat exchanger 304a may have a temperature of approximately 28° C and pressure of approximately 1.01 bar (i.e., the design inlet pressure of the fuel cell system 302) The cooled, dry air enters the fuel cell system 302, which may be substantially similar to fuel cell system 102 shown in FIG. 1 and described above, at a pressure and temperature similar to those found at ground level. The electromechanical and mechanical processes of the fuel cell system 302 produce an exhaust flow ejected against the same ground level pressure, i.e., 1.01 bar, while the temperature and relative humidity are increased to approximately 80° C and 21%, respectively. The fuel cell system exhaust flow is then heated as it passes through the second heat exchanger 304b, with the temperature rising to around 93° C and the relative humidity reduced to approximately 13% at the expense of small pressure drop (around 0.01 bar). The heated fuel cell system exhaust flow is then expanded in the turbine 308, resulting in a substantially reduced pressure (to about 0.34 bar) and temperature (to about 23° C). The relative humidity of the resulting turbine exhaust flow is increased to about 125% as a result of this expansion process. Before exiting the system 300 to ambient, the turbine exhaust flow is heated as it is routed through the first heat exchanger 304a, resulting in an overall system exhaust flow at approximately 0.3 bar, 78° C, and a relative humidity of around 7 percent.

Compared to the system 100 shown in FIG. 1, system 300 includes an extra heat exchanger while omitting one turbine. This difference results in a slightly different power draw from the motor-generator 310 which drives the compressor 306 via shaft 312. In some embodiments, the turbine 308 is also located along shaft 312, although in other embodiments the turbine, compressor, and motor-generator may be independently connected. In the embodiment shown, the configuration of the system 300 results in a net power requirement for the motor-generator 310 of about 8.6% of the power generated by the fuel cell system 302.

Referring now to FIG. 4, another embodiment of a system 400 for recreating ground conditions for a fuel cell system 402 includes a first compressor 406a, a heat exchanger 404, a second compressor 406b, the fuel cell system 402, a turbine 408, and an electric machine (such as a motor or generator) 410. At an inlet, the first compressor 406a intakes ambient air which may be at a reduced temperature and pressure compared to air at ground conditions. For example, the ambient air may have a pressure of approximately 0.3 bar, and a temperature of approximately -44° C (roughly corresponding to the temperature and pressure found at an altitude of 30,000 feet as given by the U.S. standard atmosphere). Similar to the systems 100 and 300 shown in FIGs. 1 and 3, respectively, the system 400 may operate at a variety of ambient pressures and/or temperatures, and the specific values of pressure, temperature, and relative humidity described herein illustrate an example case, and are not intended to be limiting.

The compressor 406a increases the pressure and temperature of the incoming air and discharges compressed air into the heat exchanger 404. The compressed air, referred to as feed air, exits the first compressor 406a at a pressure greater than ambient pressure, but less than the pressure typically experienced at ground conditions; in the illustrated example, the feed air has a pressure of approximately 0.91 bar, and a temperature of approximately 77° C. The relative humidity of this feed air is at or near zero percent. The feed air from the first compressor is cooled by the heat exchanger 404 to approximately 17° C, with some pressure drop (0.04 bar) before it is fed into the second compressor 406b. The second compressor 406b increases the pressure and temperature of the feed air and discharges compressed air into the fuel cell system 402. The flow exiting the second compressor 406b has a pressure similar to that of ground conditions, approximately 1.01 bar, and a temperature of approximately 36° C, with the relative humidity remaining at or near zero percent.

The electromechanical and mechanical processes of the fuel cell system 402 produce an exhaust flow ejected against the same ground pressure level, i.e. 1.01 bar (1.0 atm), while the temperature and relative humidity are increased to approximately 80° C and 21%, respectively. The exhaust from the fuel cell system 402 is then expanded in the turbine 408, resulting in a substantially decreased pressure (to slightly above the ambient pressure) of about 0.34 bar, decreased temperature of about 11° C, and substantially increased relative humidity, to approximately 263%. The turbine exhaust is then routed through the heat exchanger 404, where it is heated and dried while experiencing some pressure drop, before exiting to ambient at approximately 0.3 bar, 70° C, and a relative humidity of 10%.

Compared to the system 100 shown in FIG. 1, system 400 includes an extra compressor while omitting one turbine. This difference results in a slightly different power draw from the motor generator 410 which drives the compressors 406a and 406b via shaft 412. In some embodiments, the turbine 408 is also located along shaft 412, although in other embodiments the turbine and the compressors may be independently connected each to its own electric motor-generator. In the embodiment shown, the configuration of the system 400 results in a net power requirement for the motor-generator 410 of about 8.4% of the power generated by the fuel cell system 402.

**Claims**

1. A method of recreating ground conditions for a fuel cell system for use in a vehicle, the method comprising:

    providing a fuel cell system, a compressor, a heat exchanger, a turbine, and an electric machine drivingly connected to the compressor and the turbine;
    receiving air at an ambient pressure and an ambient temperature at an inlet of the compressor;
    forming compressed air by increasing the pressure and temperature of the air via the compressor and discharging the compressed air;
    reducing the temperature of the compressed air in the heat exchanger and discharging the air into the fuel cell system;
    generating electrical energy via the fuel cell system and discharging a fuel cell exhaust flow from the fuel cell system;
    reducing the pressure and temperature of the fuel cell exhaust flow via the turbine and discharging a turbine exhaust flow from the turbine into the heat exchanger;
    increasing the temperature of the turbine exhaust flow via the heat exchanger and discharging the increased temperature turbine exhaust from the heat exchanger; and

discharging an exhaust flow from the system at a pressure which is substantially equal to the ambient pressure.

2. The method according to claim 1, further comprising balancing the power produced by the turbine and the power consumed by the compressor via the electric machine.

3. The method according to claim 1 or 2, further comprising:

providing a second turbine drivingly connected to the electric machine; and
reducing the temperature and pressure of the first turbine exhaust flow discharged from the heat exchanger via the second turbine;
wherein the system exhaust flow is discharged from the second turbine.

4. The method according to any of claims 1 to 3, further comprising:

providing a second heat exchanger;
cooling the compressed air discharged from the compressor in the second heat exchanger to an intermediate temperature between the temperature of the compressed air discharged by the compressor and the compressed air discharged by the first heat exchanger; and
increasing the temperature of the fuel cell system exhaust flow via the second heat exchanger between the fuel cell system and the turbine;
wherein the system exhaust flow is discharged from the first heat exchanger.

5. The method according to any of claims 1 to 4, further comprising:

providing a second compressor drivingly connected to the electric machine; and
increasing the pressure and temperature of the compressed air exiting the heat exchanger between the heat exchanger and the fuel cell system.

6. A system for recreating ground conditions for a fuel cell system for use in a vehicle, the system comprising:

at least one compressor;
at least one turbine;
at least one heat exchanger; and
at least one electric machine;
wherein:

the system connects to the fuel cell system via at least two of: at least one compressor, at least one heat exchanger, and at least one turbine; and
the at least one compressor and the at least one turbine are drivingly connected to the at least one electric machine, the at least one electric machine being configured to convert between the electrical power subtracted from or added to the fuel cell system and the sum of mechanical powers of the at least one compressor and the at least one turbine.

7. The system according to claim 6, wherein the at least one compressor and the at least one turbine are drivingly connected to the electric machine along a common shaft.

8. The system according to claim 6 or 7, wherein the electric machine is selected from the group consisting of: an electric motor, a generator, and a motor-generator.

9. The system according to any of claims 6 to 8, wherein the fuel cell system comprises one or more fuel cell stacks and at least one balance of plant device.

10. The system according to any of claims 6 to 9, wherein the at least one compressor is a single compressor, the at least one heat exchanger is a single counterflow heat exchanger, and the at least one turbine comprises a first turbine and a second turbine.

11. The system according to claim 10, wherein:

the compressor is configured to receive ambient air at an ambient temperature and pressure, the compressor being connected to and in fluid communication with a first side of the heat exchanger;
the fuel cell system is connected to and in fluid communication with the first turbine, the first turbine being configured to receive a fuel cell system exhaust flow and discharge a first turbine exhaust flow into a second side of the heat exchanger; and
the second turbine is connected to and in fluid communication with the second side of the heat exchanger, the second turbine being configured to discharge a second turbine exhaust flow at a pressure substantially equal to the ambient pressure.

12. The system according to any of claims 6 to 11, wherein the at least one compressor is a single compressor, the at least turbine is a single turbine, and the at least one heat exchanger is a first heat exchanger and a second heat exchanger.

13. The system according to claim 12, wherein:

the compressor is configured to receive ambient air at an ambient temperature and pressure, the compressor being connected to and in fluid communication with a first side of the first heat exchanger;
a first side of the second heat exchanger is connected to and in fluid communication with the first side of the first heat exchanger and the fuel cell system;
the second side of the first heat exchanger is connected to and in fluid communication with the fuel cell system and the turbine; and
the second side of the second heat exchanger is connected to and in fluid communication with the turbine and is configured to discharge an exhaust flow at a pressure substantially equal to the ambient pressure.

14. The system according to any of claims 6 to 9, wherein the at least one compressor is a first compressor and a second compressor, the at least one heat exchanger is a single counterflow heat exchanger, and the at least one turbine is a single turbine.

15. The system according to claim 14, wherein:

the first compressor is configured to receive ambient air at an ambient temperature and pressure, the first compressor being connected to and in fluid communication with a first side of the heat exchanger;
the second compressor is connected to and in fluid communication with the first side of the heat exchanger and the fuel cell system; and
the turbine is connected to and in fluid communication with the fuel cell system and a second side of the heat exchanger and the second side of the heat exchanger is configured to discharge an exhaust flow at a pressure substantially equal to the ambient pressure.

**FIG. 1**

200

Providing a fuel cell, a compressor, a heat exchanger, a first turbine, a second turbine, and an electric motor drivingly connected to the compressor, the first turbine, and the second turbine.　210

Receiving air at an ambient pressure and an ambient temperature at an inlet of the compressor.　220

Increasing the pressure and temperature of the air via the compressor and discharging the air into the heat exchanger.　230

Reducing the temperature of the air in the heat exchanger and discharging the air into the fuel cell.　240

Generating electrical energy via the fuel cell and discharging a fuel cell exhaust flow from the fuel cell into the first turbine.　250

Reducing the pressure and temperature of the fuel cell exhaust flow via the first turbine and discharging a first turbine exhaust flow from the first turbine into the heat exchanger.　260

Increasing the temperature of the first turbine exhaust flow via the heat exchanger and discharging the first turbine exhaust flow from the heat exchanger into the second turbine.　270

Reducing the pressure and temperature of the first turbine exhaust flow via the second turbine and discharging a second turbine exhaust flow at a pressure which is substantially equal to the ambient pressure.　280

## FIG. 2

FIG. 3

EP 4 629 352 A1

FIG. 4

Europäisches
Patentamt

European
Patent Office

Office européen
des brevets

# EUROPEAN SEARCH REPORT

**Application Number**

EP 25 15 7386

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/344683 A1 (ANCIMER RICHARD J [CA] ET AL) 27 October 2022 (2022-10-27) * claims 1, 3-5, 12-14, 17-20 * * paragraphs [0007] - [0012], [0021] - [0086] * * examples 1-5 * | 1-15 | INV. H01M8/00 H01M8/04014 H01M8/04111 H01M8/04701 H01M8/04746 |
| X | EP 3 621 138 A1 (HONEYWELL INT INC [US]) 11 March 2020 (2020-03-11) * claims 1-3, 10 * * paragraphs [0006] - [0008], [0012] - [0027] * | 1-15 | ADD. H01M8/10 |
| X | EP 4 261 961 A2 (ROLLS ROYCE PLC [GB]) 18 October 2023 (2023-10-18) * claims 1-15 * * paragraphs [0006] - [0021], [0023] - [0039] * | 1-15 | |
| X | US 2023/358166 A1 (VEILLEUX JR LEO J [US] ET AL) 9 November 2023 (2023-11-09) * claims 1, 3-15, 18, 19 * * paragraphs [0005] - [0024], [0040] - [0056] * | 1-15 | TECHNICAL FIELDS SEARCHED (IPC) H01M |
| X | US 2009/309364 A1 (MARCONI PATRICK [FR]) 17 December 2009 (2009-12-17) * claims 1-8 * * paragraphs [0006] - [0016], [0020] - [0035] * | 1-15 | |

The present search report has been drawn up for all claims

| Place of search | Date of completion of the search | Examiner |
|---|---|---|
| Munich | 1 August 2025 | Perednis, Dainius |

## EP 4 629 352 A1

### ANNEX TO THE EUROPEAN SEARCH REPORT
### ON EUROPEAN PATENT APPLICATION NO.

EP 25 15 7386

This annex lists the patent family members relating to the patent documents cited in the above-mentioned European search report.
The members are as contained in the European Patent Office EDP file on
The European Patent Office is in no way liable for these particulars which are merely given for the purpose of information.

01-08-2025

| Patent document cited in search report | | Publication date | Patent family member(s) | | Publication date |
|---|---|---|---|---|---|
| US 2022344683 | A1 | 27-10-2022 | CA | 3152824 A1 | 14-05-2021 |
| | | | CN | 113728479 A | 30-11-2021 |
| | | | EP | 4055653 A1 | 14-09-2022 |
| | | | US | 2022344683 A1 | 27-10-2022 |
| | | | WO | 2021092021 A1 | 14-05-2021 |
| EP 3621138 | A1 | 11-03-2020 | EP | 3621138 A1 | 11-03-2020 |
| | | | US | 2020075971 A1 | 05-03-2020 |
| EP 4261961 | A2 | 18-10-2023 | EP | 4261961 A2 | 18-10-2023 |
| | | | US | 2023391467 A1 | 07-12-2023 |
| US 2023358166 | A1 | 09-11-2023 | EP | 4273379 A1 | 08-11-2023 |
| | | | US | 2023358166 A1 | 09-11-2023 |
| US 2009309364 | A1 | 17-12-2009 | CA | 2656435 A1 | 03-01-2008 |
| | | | CN | 101479153 A | 08-07-2009 |
| | | | DE | 112007001611 T5 | 30-04-2009 |
| | | | FR | 2902759 A1 | 28-12-2007 |
| | | | GB | 2452217 A | 25-02-2009 |
| | | | JP | 5269780 B2 | 21-08-2013 |
| | | | JP | 2009541141 A | 26-11-2009 |
| | | | RU | 2009102513 A | 10-08-2010 |
| | | | US | 2009309364 A1 | 17-12-2009 |
| | | | WO | 2008001006 A1 | 03-01-2008 |

EPO FORM P0459

For more details about this annex : see Official Journal of the European Patent Office, No. 12/82

15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6908702 B, McElroy
- US 9604730 B, Hagh
- US 10644331 B, Stoia
- US 20220344683 A, Ancimer
- US 20220344687 A, Okabe